# EUROPÄISCHE PATENTSCHRIFT

(11) **EP 0 452 261 B1**
(45) Veröffentlichungstag und Bekanntmachung des Hinweises auf die Patenterteilung: **24.11.1993**
(21) Anmeldenummer: 91810238.5
(22) Anmeldetag: 03.04.1991
(51) Int. Cl.: F15B 1/00

(54) **Fahrbares, hydraulisches Antriebsaggregat**
Wheeled hydraulic power unit
Groupe mobile générateur de pression hydraulique

(30) Priorität: 10.04.1990 CH 1208/90
(43) Veröffentlichungstag der Anmeldung: 16.10.1991
(73) Patentinhaber: HYDROSTRESS AG, CH-8330 Pfäffikon (CH)
(72) Erfinder: Bieri, Hans, CH-8330 Pfäffikon (CH)
(74) Vertreter: Bosshard, Ernst

(56) Entgegenhaltungen:
- DE-A- 2 851 089
- GB-A- 2 114 235
- US-A- 2 354 278
- PATENT ABSTRACTS OF JAPAN Band 4, Nr. 176 (M-45)(658), 5. Dezember 1980; & JP - A - 55126101 (HITACHI SEISAKUSHO) 29.09.1980
- ENGINEERS' DIGEST Band 38, Nr. 12, Dezember 1977, Seiten 15-20; I. McNEIL: "Packaged hydraulic equipment"

## Beschreibung

Die Erfindung bezieht sich auf ein fahrbares, hydraulisches Antriebsaggregat nach dem Oberbegriff des Anspruches 1. Ein solches Aggregat ist aus der DE-A- 2851 089 bekannt.

Derartige hydraulische Antriebsaggregate werden insbesondere zum Antrieb hydraulischer Bearbeitungswerkzeuge gebraucht. Solche hydraulische Bearbeitungswerkzeuge können Antriebsmotoren für grosse Beton-Kernbohrer, fahrbare Beton-Kreissägen, hydraulische Beton-Abbaugeräte od.dgl. sein. Bei solchen Anlagen ist das Aggregat, welches den hydraulischen Druck erzeugt, von den eigentlichen Werkzeugen oder Geräten getrennt und durch Schläuche verbunden. Mit zunehmendem Leistungsbedarf solcher hydraulisch betätigten Werkzeuge und Geräte wird das hydraulische Antriebsaggregat zusammen mit seinem Antriebsmotor so gross und so schwer, dass es nicht mehr in das Innere mehrstöckiger Gebäude transportierbar ist.

Mit der Erfindung soll die Aufgabe gelöst werden, ein hydraulisches Antriebsaggregat zu schaffen, das zwar eine hohe hydraulische Leistungsabgabe hat, das aber im Innern eines Gebäudes auch in Treppenhäusern manuell oder in Personenliften transportierbar ist und auch durch Türöffnungen üblicher Grösse hindurch gelangen kann und somit keine Krananlage oder Hebezeuge erforderlich sind.

Diese Aufgabe wird durch die im Kennzeichen des Anspruches 1 genannten Merkmale gelöst.

Durch die sehr gedrängte Bauart mit etwa vertikalen Achsen des Antriebsmotors und der Pumpe ist es möglich die Aussenabmessungen des Aggregates so gering zu halten, sodass es auch über enge Treppenhäuser und in Personen-Liftanlagen transportierbar ist. Zudem lässt sich zum Transport das Gesamtgewicht verringern, indem der Antriebsmotor mit wenigen Handgriffen vom übrigen Aggregat trennbar und sodann separat transportierbar ist.

In der Zeichnung ist ein Ausführungsbeispiel des Erfindungsgegenstandes dargestellt. Es zeigen:

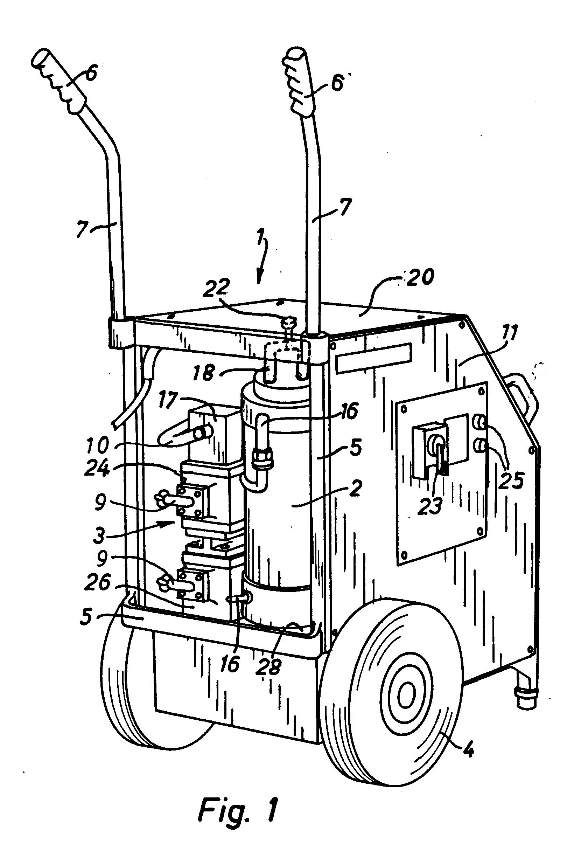

- Fig. 1: eine Gesamtansicht des Antriebsaggregates
- Fig. 2: einen Vertikalschnitt durch den Sockel
- Fig. 3: eine Draufsicht auf die Abstützorgane des Elektromotors

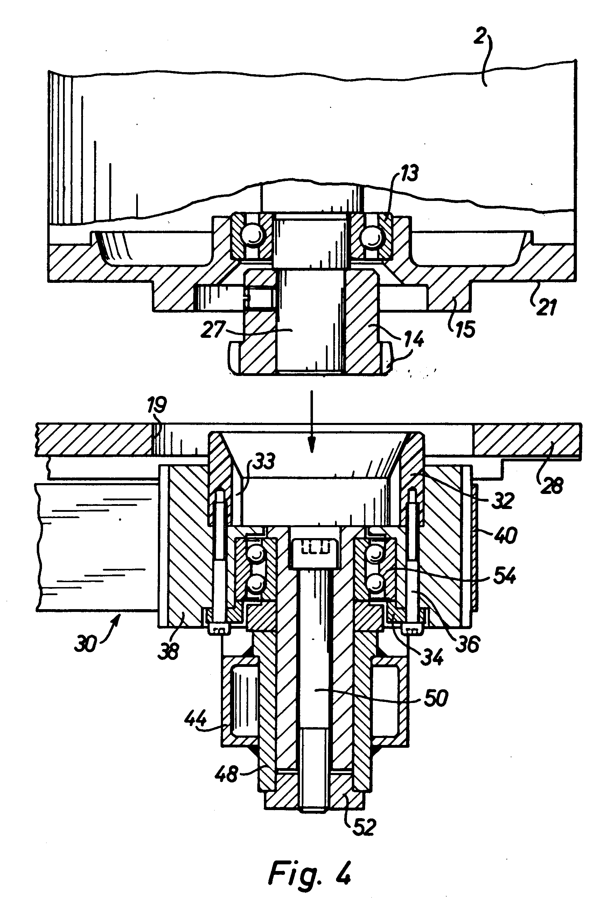

- Fig. 4: einen Längsschnitt durch die Kupplung im auseinandergezogenen Zustand

Das Antriebsaggregat 1 ist fahrbar und enthält einen Elektromotor 2 und mindestens ein mit diesem antriebsverbundenes Hochdruck-Pumpenaggregat 3, mit dem in einem hydraulischen System ein Hochdruck erzeugbar ist. Dieses mit zwei Rädern 4 versehene Antriebsaggregat enthält ein Chassis 5, das aussen durch Abdeckbleche 11,20 verkleidet ist. Das Chassis 5 ist für den Transport mit zwei Handgriffen 6 versehen, die mit nach oben vorstehenden, wegnehmbaren Stangen 7 verbunden sind. Das Antriebsaggregat 1 enthält alle zur Steuerung und Regelung erforderlichen Geräte, Schalter 23 und Anzeigeinstrumente 24. Ferner sind Anschlussarmaturen 9,10 für das Drucköl und für Kühlwasser sowie ein Oeltank vorhanden. Der Elektromotor 2 ist ein wassergekühlter Dreiphasen-Drehstrommotor, dessen Antriebswelle 27 unten ein Kupplungsglied in Form eines Bogenzahn-Kupplungsrades 14 enthält. Für das Kühlwasser sind oben und unten Anschlussnippel 16 vorhanden, die mit Schläuchen verbunden werden können. Die Oberseite des Elektromotores 2 mit vertikaler Drehachse ist mit einem Bügelgriff 18 versehen, der durch eine Schraube 22 fixiert ist.

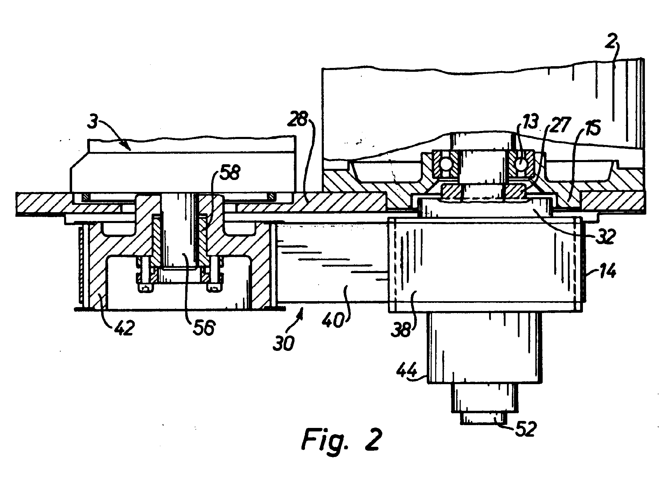

Das Hochdruck-Pumpenaggregat 3 enthält vorzugsweise zwei übereinander koaxial angeordnete und miteinander starr verbundene Zahnradpumpen 24,26 mit mindestens angenähert vertikaler Drehachse für das Drücköl, sowie eine Pumpe 17 für das Kühlwasser. Die beiden Hochdruck-Pumpen 24,26 für die Hydraulikflüssigkeit sind so ausgelegt, dass sie entweder unterschiedliche Fördermengen oder unterschiedliche Drücke erzeugen. Durch ein Steuerventil, wie dies beispielsweise im US-Patent Nr. 4 964 434 beschrieben ist, kann entweder nur die eine oder die andere oder beide Pumpen gemeinsam mit einer hydraulischen Abgangsleistung mit einem hydraulischen Druck von etwa 240 bar verbunden werden. Da das Getriebe 30 unterhalb der Montageplatte 28 angeordnet ist, ergibt sich eine sehr gedrängte Bauart, da Pumpen und Motor 2 dicht nebeneinander angeordnet werden können. Gemäss Fig. 2 ist am Fuss des Chassis 1 eine Montageplatte 28 starr mit diesem befestigt, auf der der Elektromotor 2 und das Pumpenaggregat 3 sitzen. Der Flansch des Elektromotores 2 greift mit einer Ringrippe 15 zentrierend in eine Oeffnung 19 der Montageplatte 28 ein und liegt mit seiner Fläche 21 lose auf der Montageplatte 28 auf. Auf der mindestens angenähert vertikalen Antriebswelle 27 sizt drehfest unterhalb eines Kugellagers 13 das Bogenzahn-Kupplungsrad 14, das in eine Hülse 32 mit Innenverzahnung 33 aus einem zähen Kunststoff eingreift.
Eine Ringscheibe 34 ist durch mehrere Schrauben 36 von unten mit dieser Hülse 32 verbunden. Die Ringscheibe 34 drückt gegen die untere Stirnfläche einer Rolle 38, sodass eine drehfeste Verbindung zwischen dieser Rolle 38 und der gezahnten Hülse 32 gebildet wird. Um diese Rolle 38 ist ein endloser Riemen 40, vorzugsweise ein Zahnriemen geschlungen, der über die Rolle 42 des Pumpenaggregates 3 geführt ist. Mit einer horizontalen stationären Strebe 44 als Teil des Chassis 5 ist eine Buchse 48 verschweisst. Diese ist von einer Schraube 50 durchdrungen, die unten in eine Scheibe 52 eingeschraubt ist. Durch Festziehen der Schraube 50 wird der Innenring des Kugellagers 54 festgeklemmt. Die Rolle 38 ist somit nicht mit der Montageplatte 28 verschraubt.

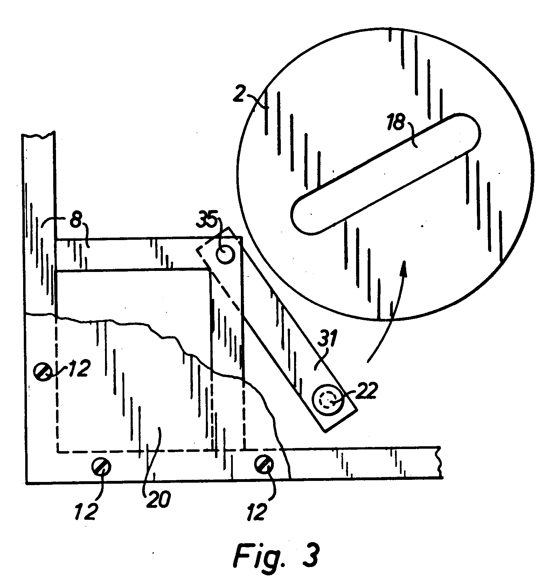

Dadurch ergibt sich eine radial gedrängte Bauart.
Die Antriebswelle 56 des Pumpenaggregates 3 ist über eine Klemmhülse 58 mit der Riemen-Rolle 42 drehfest verbunden. An Stelle einer Klemmhülse 58 könnte auch ein üblicher Keil verwendet werden. Zum Spannen des Riemens 40 ist das Pumpenaggregat 3 um eine zur Antriebswelle 56 exzentrische Achse schwenkbar.
Der Elektromotor 2 ist oben mit einem Bügelgriff 18 versehen. Eine auf einem schwenkbaren Hebel 31 sitzende Schraube 22 drückt gegen den Bügelgriff 18 und sichert den Elektromotor 2 in seiner Arbeitslage. Der Hebel 31 ist um einen Bolzen 35 schwenkbar, der in einem horizontalen Rahmen 8 des Chassis sitzt. Die beiden ineinandergreifenden Kupplungsteile 14 und 32,33 bilden eine trennbare Kupplung, sodass der Elektromotor 2 nach Entfernen des Deckbleches 20, Lösen der Schrauben 12, Zurückdrehen der Schraube 22 und Verschwenken des Hebels 31 in die in Fig. 3 gezeichnete Lage, von Hand nach oben herausgehoben werden kann. Somit sind zum Abheben des Elektromotores 2 keine weiteren Schrauben zu lösen, sodass das Kuppeln und Entkuppeln sehr schnell vor sich gehen kann. Da das Gewicht des 13 KVA Elektromotores samt Wasserkühlmantel rund ein Drittel des Gesamtgewichtes des ganzen Antriebsaggregates von beispielsweise etwa 138 kg beträgt, lassen sich die Teile im getrennten Zustand ohne Krananlage, Hebezeuge od.dgl. manuell auch an schwer zugängliche Stellen im Innern eines Gebäudes transportieren.

Durch das Abheben des Elektromotores 2 lässt sich der Riemen 40 leicht wechseln. Ausserdem ist eine leichte Anpassung des Uebersetzungsverhältnisses möglich, indem sich die beiden Rollen 38 und 42 mit geringem Aufwand gegen solche mit anderen Abmessungen auswechseln lassen. An Stelle eines Riemen-Untersetzungsgetriebes könnte auch ein Zahnrad-Getriebe vorgesehen werden.

## Patentansprüche

1. Fahrbares, hydraulisches Antriebsaggregat, mit einem Chassis (5), einem Antriebsmotor (2) und mindestens einer hydraulischen Pumpe (3), dadurch gekennzeichnet, dass im Chassisfuss zwischen Antriebsmotor (2) und Pumpenaggregat (3) ein Untersetzungsgetriebe (30) mit Kupplungsgliedern (14,32) eingebaut ist, der Antriebsmotor ein elektrischer wassergekühlter Drehstrommotor ist, der in stehender Lage mit vertikaler oder angenähert vertikaler Antriebswelle (27) auf das Untersetzungsgetriebe (30) aufgesetzt ist, der Antriebsmotor samt seinem Kupplungsglied (14) nach oben abhebbar ist und das Pumpenaggregat (3) mit vertikaler Antriebsachse (56) seitlich des Antriebsmotors (2) angeordnet und über Zwischenglieder (40) mit dem Antriebsmotor (2) antriebsverbunden ist.

2. Antriebsaggregat nach Anspruch 1, dadurch gekennzeichnet, dass das Untersetzungsgetriebe (30) auf einer chassisfesten Montageplatte (28) aufgebaut ist und aus zwei ungleich grossen Rädern (38,42) mit parallelen vertikalen Achsen besteht, die über einem endlosen Zahnriemen (40) antriebsverbunden sind.

3. Antriebsaggregat nach Anspruch 2, dadurch gekennzeichnet, dass das Pumpenaggregat (3) zum Spannen des Zahnriemens (40) auf der Montageplatte (28) um eine zur Pumpendrehachse (56) exzentrische Achse schwenkbar ist.

4. Antriebsaggregat nach einem der Ansprüche 1-3, dadurch gekennzeichnet, dass mindestens zwei koaxial übereinander angeordnete Pumpen (24,26) vorhanden sind.

5. Antriebsaggregat nach einem der Ansprüche 1-4, dadurch gekennzeichnet, dass der Antriebsmotor (2) an seinem obern Ende einen Bügelgriff (18) aufweist, gegen den eine lösbare Druckschraube (22) als einziges Befestigungsmittel anliegt.

6. Antriebsaggregat nach einem der Ansprüche 2-5, dadurch gekennzeichnet, dass die motorseitige Riemenrolle (38) mit einem Kupplungsrad (32) starr verbunden ist, in welches das mit der Motorwelle (27) verbundene Gegenkupplungsrad (14) lose eingreift und die Riemenrolle (38) über ein Wälzlager (54) mittels einer Schraube (50) gegen eine unterhalb der Montageplatte (28) angeordnete Strebe (44) des Chassis festgeschraubt ist.

## Claims

1. Mobile, hydraulic drive unit, having a chassis (5), a drive motor (2) and at least one hydraulic pump (3), characterized in that in the foot of the chassis between the drive motor (2) and the pump unit (3) there is installed a reduction gearing (30) having coupling elements (14, 32), in that the drive motor is an electrical, water-cooled three-phase motor which is mounted in a standing position, with a vertical or approximately vertical drive shaft (27), onto the reduction gearing (30), in that the drive motor, together with its coupling element (14), can be raised upwardly, and in that the pump unit (3) with vertical drive axle (56) is disposed at the side of the drive motor (2) and is drive-connected via intermediate elements (40) to the drive motor (2).

2. Drive unit according to Claim 1, characterized in that the reduction gearing (30) is mounted on a chassis-fixed mounting plate (28) and comprises two different-sized wheels (38, 42) having parallel, vertical axles, which are drive-connected via a continuous toothed belt (40).

3. Drive unit according to Claim 2, characterized in that the pump unit (3), in order to clamp the toothed belt (40) on the mounting plate (28), is pivotable about an axis eccentric to the rotational axle (56) of the pump.

4. Drive unit according to one of Claims 1-3, characterized in that at least two pumps (24, 26) disposed coaxially one above the other are present.

5. Drive unit according to one of Claims 1-4, characterized in that the drive motor (2) exhibits, at its upper end, a bow handle (18), against which a detachable pressure screw (22) bears as a sole fastening means.

6. Drive unit according to one of Claims 2-5, characterized in that the motor-side belt roller (38) is rigidly connected to a coupling wheel (32) in which the counter-coupling wheel (14) connected to the motor shaft (27) loosely engages and the belt roller (38) is screwed tight via a rolling bearing (54), by means of a screw (50), against a strut (44) of the chassis, which strut is disposed beneath the mounting plate (28).

## Revendications

1. Groupe mobile générateur de pression hydraulique, comportant un châssis (5), un moteur d'entraînement (2), et au moins une pompe hydraulique (3), caractérisé en ce qu'un boîtier réducteur (30) pourvu d'organes de transmission (14, 32) est monté sur le châssis support entre le moteur d'entraînement (2) et le groupe de pompage (3), en ce que le moteur d'entraînement est un moteur électrique triphasé refroidi à l'eau, qui est placé sur le réducteur avec son arbre moteur (27) en position verticale ou approximativement verticale, en ce que le moteur d'entraînement y compris son organe de transmission (14) peuvent être retirés vers le haut et en ce que le groupe de pompage (3) qui est positionné avec son axe de rotation (56) en position verticale à côté du moteur (2) est couplé à ce moteur (2) par des organes de transmission intermédiaires (40).

2. Groupe mobile selon la revendication 1, caractérisé en ce que le boîtier réducteur (30) qui est monté sur une plaque de montage (28) fixée au châss;s, est constitué de deux poulies (38, 42) de diamètres différents à axes parallèles et verticaux, qui sont reliés en transmission par une courroie dentée sans fin (40).

3. Groupe mobile selon la revendication 2, caractérisé en ce que, pour obtenir la tension de la courroie dentée (40), le groupe de pompage (3) peut être tourné sur la plaque de montage (28) autour d'un axe excentrique par rapport à l'axe de rotation de la pompe (56).

4. Groupe mobile selon l'une quelconque des revendications 1 à 3, caractérisé en ce qu'on prévoit au moins deux pompes coaxiales (24, 26) positionnées l'une sur l'autre.

5. Groupe mobile selon l'une quelconque des revendications 1 à 4, caractérisé en ce que le moteur d'entraînement (2) présente à son extrémité supérieure une poignée en forme d'étrier (18), et en ce qu'une vis de pression (22) desserrable placée contre cette poignée représente le seul moyen de fixation utilisé.

6. Groupe mobile selon l'une quelconque des revendications 2 à 5, caractérisé en ce que la poulie (38) côté moteur est solidaire d'une roue dentée de transmission (32), dans laquelle engrêne librement la contre-roue de transmission (14) reliée à l'arbre du moteur (27), la poulie (38) étant boulonnée par l'intermédiaire d'un roulement (54) et au moyen d'une vis (50) et une entretoise (44) du châssis située en-dessous de la plaque de montage (28).
